# DEMANDE DE BREVET EUROPEEN

(11) **EP 3 264 574 A1**
(43) Date de publication de la demande: **03.01.2018**
(21) Numéro de dépôt: 17179172.6
(22) Date de dépôt: 30.06.2017
(51) Int. Cl.: H02K 7/18, H02K 9/04, H02K 9/19, H02K 11/04

(54) **MACHINE ELECTRIQUE AVEC CIRCUIT DE REFROIDISSEMENT**

(30) Priorité: 30.06.2016 FR 1656277
(71) Demandeur: Valeo Systemes de Controle Moteur, 95800 Cergy Saint Christophe (FR)
(72) Inventeur: ANGELOT, Pierre-Julian, 95800 CERGY SAINT CHRISTOPHE (FR); COPPIN, Thomas, 95800 CERGY SAINT CHRISTOPHE (FR)
(74) Mandataire: Garcia, Christine

(57) **Abrégé**

La présente invention concerne une machine électrique (1) comprenant au moins une roue de turbine (3) entrainant en rotation via un arbre (6) un ensemble générateur électrique (5) commandé par un ensemble électronique (9), caractérisé en ce quelle comporte un circuit de refroidissement (10) disposée entre le générateur électrique (5) et la roue de turbine (3).

## Description

La présente invention concerne le domaine des machines électriques, et plus particulièrement une machine électrique de type turbine électrique pour véhicule automobile.

Dans le cadre de l'invention, une machine électrique est un dispositif fonctionnant avec une roue de turbine entrainant un générateur électrique et comportant un ensemble électronique.

Les machines électrique de type turbine électrique sont utilisées pour produire de l'énergie électrique qui est ensuite utilisée par exemple pour assister en couple le moteur thermique. Cette énergie électrique est générée à partir de la rotation d'une roue de turbine entrainée par un flux d'air chaud et à partir d'un générateur électrique. Dans ce type de machine électrique, les gaz chaud en contact avec la volute et la roue de la turbine génèrent de la chaleur par conduction et radiation ce qui perturbe le fonctionnement du générateur électrique et de l'ensemble de l'électronique jusqu'à démagnétiser la machine électrique.

La présente invention a donc pour objet de pallier un ou plusieurs des inconvénients des dispositifs de l'art antérieur en proposant une machine électrique dont le système de refroidissement est amélioré, permettant ainsi d'optimiser le refroidissement de l'électronique et du générateur électrique.

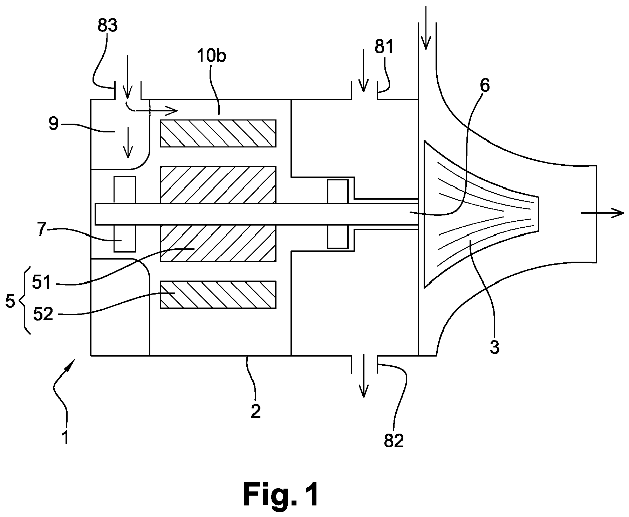

D'autres buts, caractéristiques et avantages de l'invention seront mieux compris et apparaîtront plus clairement à la lecture de la description faite, ci-après, en se référant à la figure 1 annexée, donnée à titre d'exemple et qui est une représentation schématique en coupe montrant une machine électrique selon deux modes de réalisation de l'invention.

Pour cela la présente invention propose une machine électrique comprenant au moins une roue de turbine entrainant en rotation via un arbre un ensemble générateur électrique commandé par un ensemble électronique, caractérisé en ce quelle comporte un circuit de refroidissement disposée entre le générateur électrique et la roue de turbine.

Selon un mode de réalisation, l'invention propose une machine électrique de véhicule automobile comprenant au moins une roue de turbine entrainant en rotation via un arbre un ensemble générateur électrique commandé par un ensemble électronique, caractérisé en ce quelle comporte un circuit de refroidissement disposée entre le générateur électrique et la roue de turbine.

Selon un mode de réalisation de l'invention, le circuit de refroidissement forme un anneau traversé en son centre par l'arbre.

Selon un mode de réalisation de l'invention, une partie de circuit de refroidissement disposée parallèlement à l'arbre.

Selon un mode de réalisation de l'invention, la partie de circuit de refroidissement est formé le long du générateur électrique, vers l'extérieur du générateur.

Selon un mode de réalisation de l'invention, le circuit de refroidissement comporte une entrée et une sortie de fluide de refroidissement disposées sur une face extérieure de la machine électrique, et parallèle à l'axe de l'arbre.

Selon un mode de réalisation de l'invention, l'entrée et la sortie sont disposées sur le circuit de refroidissement disposé entre la roue de turbine et le générateur électrique.

Selon un mode de réalisation de l'invention, le circuit de refroidissement comporte une entrée de fluide refroidissement disposé sur une face extérieure de la machine électrique, parallèle à l'arbre, et situé à l'extrémité de la machine électrique opposée à celle ou est située la roue de turbine.

Selon un mode de réalisation de l'invention, l'ensemble électronique est disposé à l'extrémité opposée de celle ou est disposée la roue de turbine le long de l'arbre.

L'invention concerne également, l'utilisation de la machine électrique selon l'invention dans un moteur à combustion interne, par exemple thermique, atmosphérique, suralimenté ou à pile à combustible.

La présente invention concerne une machine électrique 1 illustrée figure 1.

Sur l'exemple représenté, la machine électrique 1 est une machine électrique de véhicule automobile.

Dans le cadre de l'invention, on entend par machine électrique 1, un générateur électrique entraîné par une turbine.

Les flèches indiquent le sens de circulation des flux.

La figure 1 illustre un exemple de machine électrique 1. La machine électrique 1 comprend au moins un ensemble générateur électrique 2, et une roue de turbine 3. L'ensemble générateur électrique comprend un logement ou enveloppe dans lequel est disposé, à l'intérieur, un générateur électrique 5. Le générateur électrique 5 comporte au moins un rotor 51 et un stator 52. La roue 3 de turbine permet la mise en rotation d'un arbre 6 connecté à la machine électrique et monté par exemple sur des paliers 7. L'arbre 6 entraine ainsi en rotation le rotor 51 du générateur électrique. Plus précisément une extrémité de l'arbre 6 est entrainée en rotation par la roue 3 de turbine, et une autre extrémité de l'arbre 6 entraine en rotation le rotor 51 du générateur électrique.

Selon un mode de réalisation de l'invention, la machine électrique 1 comporte un ensemble électronique 9 permettant de commander la machine électrique 1. On entend par ensemble électronique 9, l'électronique de puissance et/ou de contrôle, et par exemple la carte électronique, les composants de filtrage (inductances...), les capacités, les modules de puissance...

Dans le cadre de l'invention, l'ensemble électronique 9, élément le plus sensible à la chaleur, est disposé à l'extrémité opposée de celle ou est disposée la roue de turbine 3le long de l'arbre 6 afin de s'éloigner au maximum de la source chaude.

Dans le cadre de l'invention, la machine électrique comporte un circuit de refroidissement 10.

Selon un mode de réalisation de l'invention, le circuit de refroidissement 10 est disposé entre la roue de turbine 3 et le générateur électrique 5. Plus précisément, le circuit de refroidissement 10 est disposé entre l'arrière de la roue et l'ensemble générateur 2. Le circuit de refroidissement 10 est ainsi disposé au plus proche du générateur électrique 5. Une telle configuration optimise le refroidissement de l'ensemble générateur 2 et permet de diminuer l'encombrement de la machine électrique.

Selon un mode de réalisation de l'invention, le circuit de refroidissement 10 forme un anneau traversé en son centre par l'arbre 6.

Selon un mode de réalisation de l'invention, la machine électrique 1 comporte une partie de circuit de refroidissement 10b disposée parallèlement à l'arbre 6. Plus précisément cette partie de circuit de refroidissement 10b est formé le long du générateur électrique 5, vers l'extérieur du générateur.

Une telle configuration optimise le refroidissement de l'ensemble électronique et permet de diminuer l'encombrement de la machine électrique.

Selon un mode de réalisation de l'invention, le circuit de refroidissement 10 comporte une entrée 81 et une sortie de fluide de refroidissement disposées sur une face extérieure de la machine électrique, et parallèle à l'axe de l'arbre 6. L'entrée 81 et la sortie 82 sont disposées sur le circuit de refroidissement, lui-même disposé entre la roue 3 et le générateur électrique 5.

Selon un mode de réalisation de l'invention, le circuit de refroidissement 10b comporte une entrée 83 de fluide de refroidissement disposé sur une face extérieure de la machine électrique, parallèle à l'arbre, et situé à l'extrémité de la machine électrique opposée à celle ou est située la roue de turbine 3. Cette entrée 83, alimente le circuit de refroidissement via la partie de circuit 10b disposée autour du générateur électrique 5.

Une machine électrique selon l'invention est utilisée dans un moteur à combustion, et par exemple un moteur à combustion interne, thermique, atmosphérique ou à pile à combustible.

La portée de la présente invention ne se limite pas aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications.

## Revendications

1. Machine électrique (1) comprenant au moins une roue de turbine (3) entrainant en rotation via un arbre (6) un ensemble générateur électrique (2) commandé par un ensemble électronique (9), caractérisé en ce quelle comporte un circuit de refroidissement (10) disposée entre le générateur électrique (5) et la roue de turbine (3).

2. Machine électrique (1) selon la revendication 1, dans laquelle le circuit de refroidissement (10) forme un anneau traversé en son centre par l'arbre (6).

3. Machine électrique (1) selon une des revendications 1 ou 2, comportant une partie de circuit (10b) de refroidissement disposée parallèlement à l'arbre (6).

4. Machine électrique (1) selon la revendication 3, dans laquelle la partie de circuit de refroidissement (10b) est formé le long du générateur électrique (5), vers l'extérieur du générateur (5).

5. Machine électrique (1) selon une des revendications 1 à 4 dans laquelle le circuit (10) de refroidissement comporte une entrée (81) et une sortie (82) de fluide de refroidissement disposées sur une face extérieure de la machine électrique, et parallèle à l'axe de l'arbre (6).

6. Machine électrique (1) selon la revendication 5, dans laquelle l'entrée (81) et la sortie (82) sont disposées sur le circuit (10) de refroidissement disposé entre la roue de turbine (3) et le générateur électrique (5).

7. Machine électrique (1) selon une des revendications 3 à 5, dans laquelle le circuit de refroidissement (10b) comporte une entrée (83) de fluide refroidissement disposé sur une face extérieure de la machine électrique, parallèle à l'arbre (6), et situé à l'extrémité de la machine électrique opposée à celle ou est située la roue de turbine (3).

8. Machine électrique (1) selon une des revendications 1 à 7, dans laquelle l'ensemble électronique (9) est disposé à l'extrémité opposée de celle où est disposée la roue de turbine (3) le long de l'arbre (6).

9. Utilisation de la machine électrique selon une des revendications 1 à 8 dans un moteur à combustion interne, par exemple thermique, atmosphérique, suralimenté ou à pile à combustible.
